# EUROPEAN PATENT APPLICATION

(11) **EP 1 962 359 A1**
(43) Date of publication of application: **27.08.2008**
(21) Application number: 06822546.5
(22) Date of filing: 23.10.2006
(51) Int. Cl.: H01M 8/04, C01B 3/06, H01M 8/00, H01M 8/06, H01M 8/10

(54) **FUEL CELL SYSTEM HAVING HYDROGEN SUPPLY SECTION**

(30) Priority: 25.10.2005 JP 2005309302
(71) Applicant: Yoshizaki, Atsuhiro, Tsukuba-shi, Ibaraki 305-0033 (JP)
(72) Inventor: Yoshizaki, Atsuhiro, Tsukuba-shi, Ibaraki 305-0033 (JP)
(74) Representative: Paget, Hugh Charles Edward
(86) International application number: PCT/JP2006/321585
(87) International publication number: WO 2007/049775

(57) **Abstract**

In a fuel sell system having a hydrogen generating apparatus, data of electric power to be supplied in response to a fluctuating power load is input to a system controller. Based on this data of electric power, an amount of water dissolved fuel to be supplied to a reactor is controlled and a fuel cell unit is operated by using hydrogen which is generated in the reactor. The fuel cell system responds to a fluctuating power load and stabilizes load current by means of a compound power that is a sum of the generated power by the fuel cell unit and charged or discharged power in the capacitor. A water separation tank which separates water from used fuel in the reactor and a temporary storage tank which stores water from the water separation tank are provided. In a hydrogen generator unit which contains a system to supply water in the temporary storage tank to the reactor, hydrogen which is generated in the reactor is supplied to the fuel cell unit.

## Description

### Technical Field:

The present invention relates to fuel cell system having hydrogen generating apparatus, in particularly relates to fuel cell system having hydrogen generating apparatus in which hydrogen is generated by means of boro-hydride fuel or equivalents, and being capable of supplying power from a fuel cell unit in a manner of responding automatically to a fluctuating power load by controlling rate of hydrogen generation.

### Background Technique:

Boro-hydride compounds, such as sodium boro-hydride or lithium boro-hydride, are well known as materials, which generate considerable amount of hydrogen by means of a catalystic reaction with water. It is widely requested to put into use a fuel cell system, which utilizes a boro-hydride fuel and contains a hydrogen generating apparatus, which is able to generate hydrogen efficiently by controlling rate of generation of hydrogen firmly and is able to respond to a fluctuating power load automatically.

### Disclosure of the Invention:

A first problem subject to be solved by the present invention is to provide fuel cell system having hydrogen generating apparatus which is capable of generating hydrogen in a manner of responding to a fluctuating power load automatically by controlling generating rate of hydrogen and makes it possible to supply stable power firmly.

A second problem subject to be solved by the present invention is to provide fuel cell system having hydrogen generating apparatus which realizes low and appropriate energy consumption performance while it is in operation.

In a fuel cell system having a hydrogen generating apparatus of the present invention, how to respond automatically to a fluctuating power load is carried out by using the sum of the power generated by the fuel cell unit and the power stored in a power storing unit which is a part of the fuel cell system and of which stored power level may vary depending on a power load status. Based on the stored power, which is the result of measurement of the fluctuating power load, the amount of the boro-hydride fuel to be supplied to a reactor, which is a part of the hydrogen generating apparatus, in which hydrogen is generated by chemical reaction, is controlled so as to obtain an optimum amount of hydrogen.

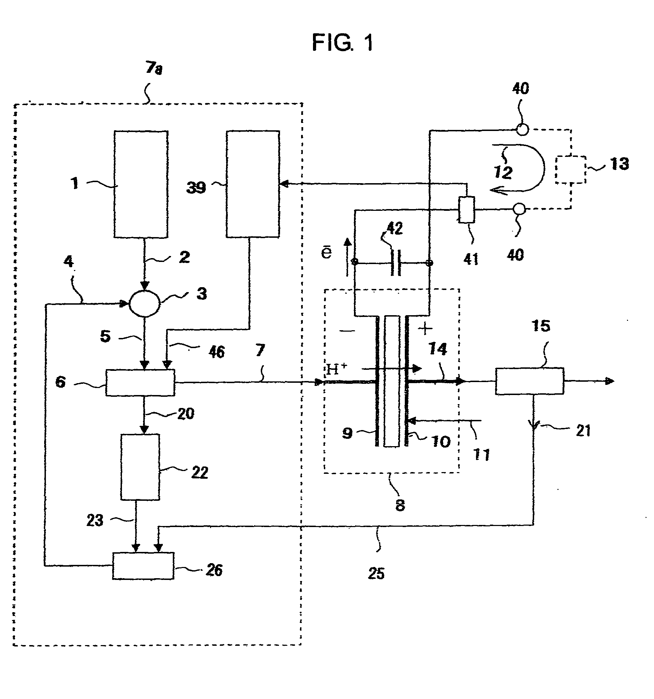

As to the first subject mentioned above, the first embodiment of fuel cell system having hydrogen generating apparatus according to the present invention will be explained referring to figures. Fig. 1 is a basic composition diagram showing an embodiment of a fuel cell system having a hydrogen generating apparatus according to the present invention. A fuel tank 1 in Fig.1 stores small amount of a solid hydride compound fuel, which is in a form of either granules or tablets.

In the explanation of the present invention hereinafter, sodium boro-hydride (NaBH4) will be taken as an example of the compound. This sodium boro-hydride is known as to react with water as shown in reaction formula 1 below. Especially it is important to know that under the existence of a catalyst, the reaction takes place rapidly and eventually large amount of hydrogen can be generated.

Reaction formula 1 : NaBH₄ + 2H2O → 4H₂ + NaBO₂

As shown in a reaction formula 1, a rate of generation of hydrogen 7 will be decided according to the rate of consumption of solid hydride fuel 2. By using the hydrogen 7, power that is equivalent to the amount of generated hydrogen 7 will be generated by fuel cell 8.

In an embodiment of a fuel cell system having a hydrogen gen erating apparatus, the control of the generated power output will be done by controlling the amount of water dissolved fuel 5 which is equivalent to load current 12, that will be detected for the purpose of deciding a controlling factor. Then, generated hydrogen 7, which is generated in response to the amount of water dissolved fuel 5, will be supplied to fuel cell unit 8. Thus the hydrogen generating apparatus which contains fuel cell 8, which will be controlled automatically and firmly in a manner of responding to a fluctuating power load 13.

Next, as to the second subject to be solved stated above, an embodiment of a fuel cell having a hydrogen generating apparatus according to the present invention will be explained referring figures.
How to get water dissolved fuel 5 is as follows. A predetermined amount of solid hydride fuel 2 and additive water 4 of which is also predetermined so as to obtain a certain concentration of the hydride fuel, are supplied to mixer 3 and will be mixed. After obtaining water dissolved fuel 5 which is processed in water dissolved fuel processing unit 3a, a controlled amount of water dissolved fuel 5 is supplied to reactor 6.

The reaction formula 1 mentioned above shows that, in the left side of the reaction formula 1, the required amount of water to carry out the reaction is two molecular (2H₂O) against one molecular of sodium boro-hydride (NaBH₄). On the other hand, in order to obtain a certain concentration of water dissolved fuel 5, an aqueous solution (. H₂O) will be added as additive water 4.

A reaction formula 2 shown below is obtained by adding the aqueous solution (. H₂O) to the left side of the reaction formula 1.

Reaction formula 2 : NaBH₄ + (2H₂ + . H₂O) → 4H₂ + NaBO₂ + . H₂O

The second term in the left side of the reaction formula 2, which shown in parenthesis as (2H₂O + . H₂O), is additive water 4.

Hydrogen gas (4H₂) shown in the right side of reaction formula 2 is generated according to reaction formula 2 in a process carried out in reactor 6. At the same time, used fuel 20, shown in the second and third term of reaction formula 2 as (NaBO₂ + . H₂O), is transferred to water separation tank 22 and the aqueous water (. H₂O) will be reused as collected water 23.

Residual sodium boronate (NaBO₂) is stored in its minimum volume after extruding water, and will be taken out and collected at a predetermined time interval. This collected sodium boronate (NaBO₂) will be reprocessed by a process, which is not shown nor explained in this statement, and will be recycled to sodium boro-hydride (NaBH₄) and will become reusable as a fuel for hydrogen generation.

As this reuse stated above makes it possible to realize repeat recycle of hydrogen related resources which are distributed unevenly on the earth, and to use resources effectively, therefore, this recycle stated above makes it possible to obtain a fuel cell system having a hydrogen generating apparatus having less burden for environment.

As to a fuel cell unit 8, of which details will be explained as follows by taking a solid high molecule film type fuel cell, which uses a high molecule ion exchange membrane as the electrolyte, as an example. Hydrogen (4H₂) in the first term of right side of the reaction formula 2 will be ionized as shown reaction formula 3 below, and will become hydrogen ion (8H⁺) and electron (8. ), and reaches to an anode 10.

Upon generating electricity at the anode 10, an ion becomes hydrogen (4H₂) again and, due to an anode reaction, oxygen (2O₂), which is contained in the supplied air 11, is combined with hydrogen (4H₂) stated above and forms water (4H₂O). An emission 14, which contains (4H₂O) mentioned above will be led to a condenser 15 and will be condensed into water, which will be collected as collected water 21.

Reaction formula 3 : (8H⁺ + 8.) + 2O₂ → 4H₂O

Now the water to be reused is composed of two parts. One is separated water 23, which is separated from used fuel 20 and is collected, and this is shown in the third term (. H₂O) in the right side of the reaction formula 2. The other one is collected water 21, which is collected from emission 14 of fuel cell 8, and this is shown as water (4H₂O) in the right side of reaction formula 3. Total sum of collected water 21 and separated water 23 becomes (4H₂O + . H₂O).

Thus, in an embodiment of a fuel cell system having a hydrogen generating apparatus according to the present invention, amount of additive water 4 is almost as much as the amount of total sum of collected water 21 and separated water 23. Collected water 21 and separated water 23, which is led from condenser 15 to temporary storage tank 26 via connecting pipe 25, will be stored temporarily in temporary storage tank 26 and will be reused as additive water 4. All those components stated above are contained in the hydrogen generating apparatus in the fuel cell system.

Furthermore, in this fuel cell system having the hydrogen generating apparatus, load current 12, which flows from output terminal 40 to power load 13, will be detected by current detector 41. Data of measured load current 12 will be fed back to system controller 39 and generating power will be controlled by a control of an injection pulse range of fuel injection 46, which controls amount of water dissolved fuel 5.

As explained above, in an embodiment of the fuel cell system having the hydrogen generating apparatus according to the present invention, water, which is produced by the chemical reaction process, is able to be reused and the used fuel 20 (sodium boronate: NaBO₂) is also able to be reused after storage in a form of minimized volume stated above. Thus, during the operation of the system, which is an embodiment of the fuel cell system having the hydrogen generating apparatus according to the present invention, it is possible to collect the used fuel 20 within the system and to reuse it, that results in realizing the fuel cell system having the hydrogen generating apparatus of which nature is less burden for environment.

### Brief Description of Drawings:

Fig. 1 is a basic composition diagram showing the first embodiment of a fuel cell system having a hydrogen generating apparatus according to the present invention.
Fig. 2 is the first embodiment of the fuel cell system having the hydrogen generating apparatus according to the present invention.
Fig. 3 is an embodiment of a part of the hydrogen generating apparatus, which is a part of fuel cell system having hydrogen generating apparatus according to the present invention.
Fig. 4 is an event flow chart showing main events and their occurrence time in the fuel cell system having the hydrogen generating apparatus according to the present invention.

### Best Mode for Carrying-out the Invention:

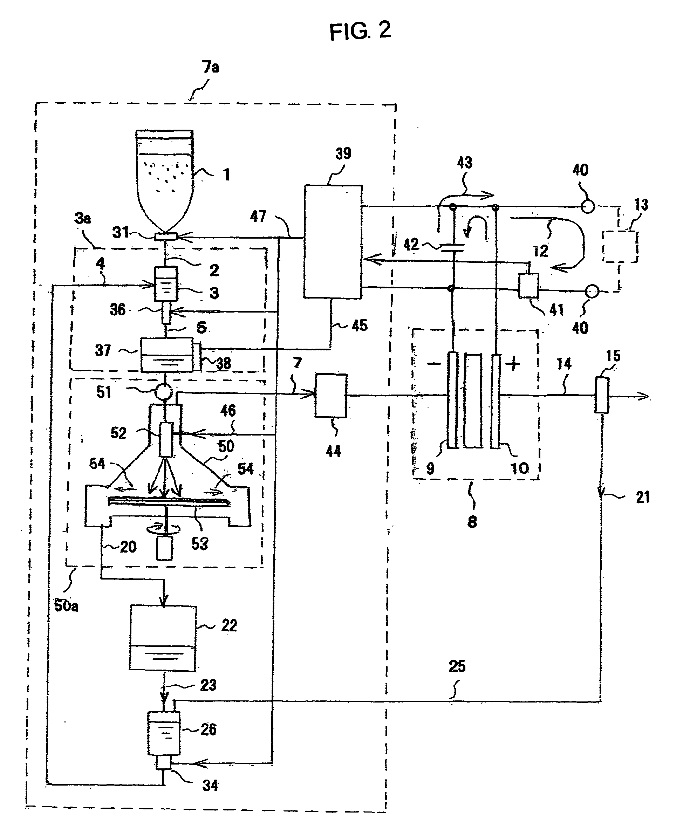

The first embodiment of the fuel cell system having the hydrogen generating apparatus according to the present invention is shown in Fig. 2. A fuel tank 1 in hydrogen generator 7a contains a granulated solid hydride fuel. Solid hydride fuel 2 generates four molecular of hydrogen through hydrolysis of one molecular of sodium boro-hydride and two molecular of water as shown in the reaction formula 1. This hydrolysis will be greatly set forward by utilizing nickel or cobalt origin catalyst.

Next, detailed process up to generation of electricity in the fuel cell system having the hydrogen generator 7a will be explained. First, water dissolved fuel 5 will be transferred to water dissolved fuel processing unit 3a by control command 47 from system controller 39, that commands to make water dissolved fuel 5 from solid hydride fuel 2. A predetermined amount of solid hydride fuel 2, which is stored in fuel tank 1, will be conveyed to a mixer 3 by a dispenser 31. At the same time, the water dissolved fuel 5 is so produced to get a predetermined concentration by mixing a predetermined amount of additive water 4, which is taken from a temporary storage tank 26 by dispenser 34, and solid hydride fuel 2 which is from the fuel tank. Mixing ratio of the two fuels is hopefully 10 to 40 percent due to the rate of dissolution of boro-hydride fuel in the water dissolved fuel 5. A dispenser 34 is installed at the bottom of a temporary storage tank 26.

The water dissolved fuel 5 will be supplied to a buffer tank 37 by dispenser 36. Timing to supply the fuel to the buffer tank is so decided that the residual amount of water dissolved fuel 5 in the buffer tank 37, which is detected by a sensor 38, reaches to a predetermined amount or below, and the water dissolved fuel 5 is produced and supplied to the buffer tank 37. Then, water dissolved fuel 5 in the buffer tank 37 will be sent to a hydrogen generator 50a. The water dissolved fuel 5 is so supplied to a reactor 50 as to be able to generate electric power in order to respond to a required outer power load, by controlling the rate of supply of water dissolved fuel 5 to the buffer tank 37 according to a fuel injection pulse range control 46 (PWM).

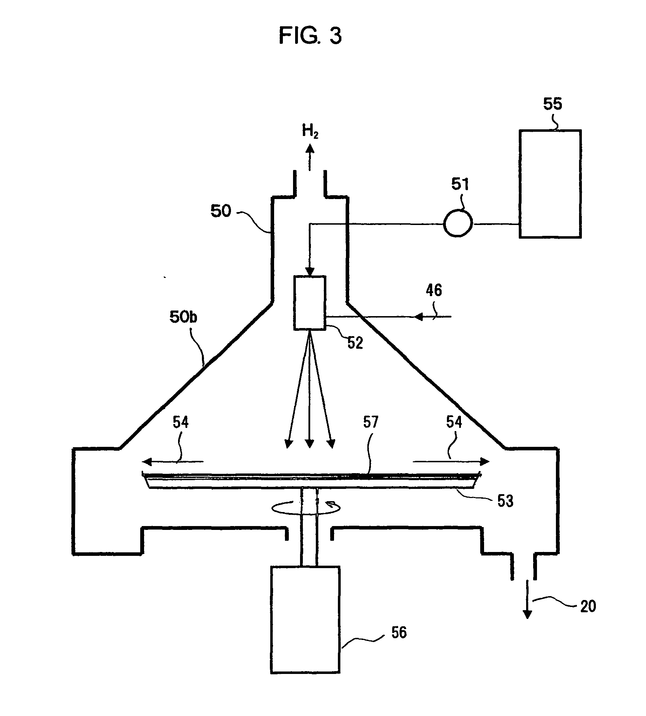

A hydrogen generator assembly 50b shown in Fig. 3 is taken into consideration as the hydrogen generator 50a. (Refer to Japanese patent laid-open publication No.2005-47765). The water dissolved fuel 5 in the buffer tank 37 is pressurized by a pressurizing pump 51 and the amount of the fuel to be supplied to the next stage is controlled by an injector 52 by means of the fuel injection pulse range control 46. About 50 pulses are used within one second and the range (width) of this each pulse is so controlled as to make the rate of injection amount of the water dissolved fuel 5 possible to respond to a high speed injection. A hydrogen generator assembly 50b contains a fuel tank which stores the water dissolved fuel 5, a rotating disk 53, and a motor 56 which rotates a rotating disk 53.

Hydrogen will be generated through the reaction of water dissolved fuel 5 by spraying the fuel onto a catalyst 57 on the surface of the rotating disk 53 in a manner of intermittent injection spray. Used fuel 20 which is generated simultaneously is separated from the catalyst, which is placed on the rotating disk 53, easily as a centrifugal separation 54 is used. As a result, such an inherent problem concerning the water dissolved fuel 5 as used fuel 20 covers the catalyst 57 and this results in discontinuation or suspension of reaction, will be solved and hydrogen will be generated firmly owing to the clean surface of the catalyst 57.

The control of output power of the system is required to respond to a fluctuating power load. That is, load current 12 that flows an output terminal 40, which is connected to the power load 13, will be detected by a current detector 41, and this result is fed back to a controller 39 as a controlling factor. Data obtained by detecting the load current 12 will be used for fuel injection pulse range control 46 stated above, and the power to be generated is controlled by means of high speed control of the injection amount of the water dissolved fuel 5. Consumption of the water dissolved fuel 5 varies due to the fuel amount control. Thus, required amount of the water dissolved fuel 5 is transferred to the next device by a control command 47 that is prepared by the controller 39 after taking a signal 45 from the sensor 38.

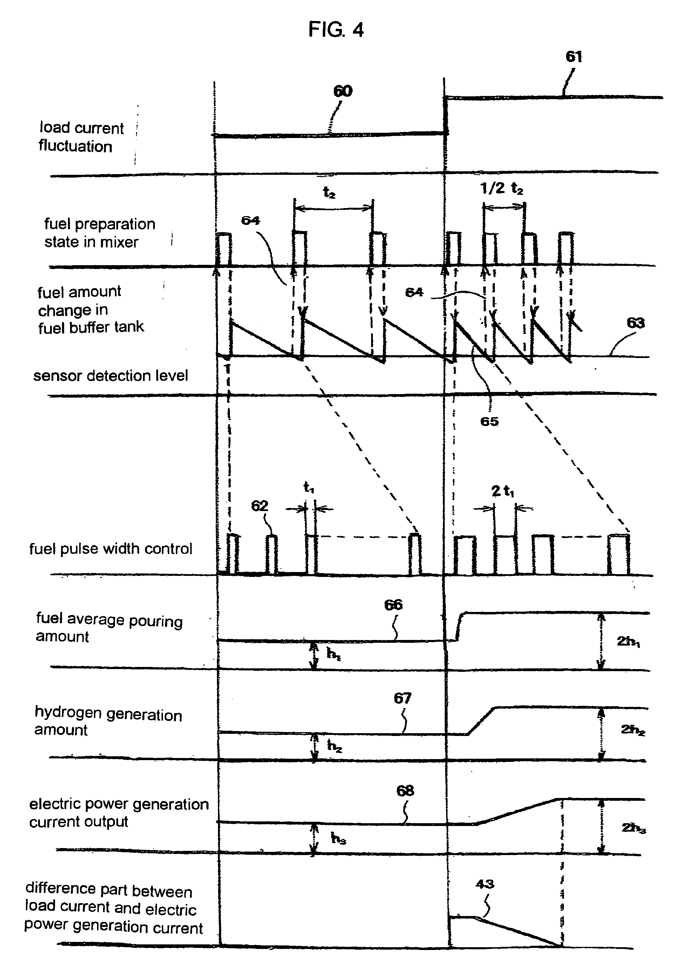

How to get control timing of the water dissolved fuel 5 and how to respond to a fluctuating power load during the time period stated above is explained by using a time chart shown in Fig.4. As an example, load current varies from current level 60 to current level 61 that is two times as much as current level 60. The water dissolved fuel 5 which is poured to the reactor 50 is controlled by the fuel injection pulse 62 of which range (width) is constant. This pulse range varies from t₁ to 2t₁ as shown according to the amount of detection by a current detector 41 stated above.

Then, average amount of the fuel injection 66 of water dissolved fuel 5 will be controlled and varied from h₁ to 2h₁ as shown in the figure. This increased consumption of the water dissolved fuel 5 causes a rapid decrease of the fuel 65 in the buffer tank 37. When the residual amount of the water dissolved fuel 5 in the buffer tank 37 reaches to a detecting level 63, a command to produce fuel within a shortened time period from t₂ to 1/2 t₂ is given to a mixer 3, and doubled amount of the water dissolved fuel 5 is supplied to the fuel buffer tank 37.

Then, production amount of hydrogen 67 increases from h₂ to 2h₂, and hydrogen 7 is led to a filter 44 for cleaning and is supplied to fuel cell unit 8 which is a part of the system. Output current 68, that is generated by the chemical reaction within fuel cell unit 8, increases from h₃ to 2h₃ with a time constant as shown in the diagram.

Therefore, in order to cope with a rapid variation off the power load, a capacitor 42, which has a high performance in charging or discharging characteristics, is connected in parallel with the terminals of fuel cell unit 6. The difference between the load current 61 and the output current 68, which is a transient current, will be treated properly by charging or a discharging capacitor 42. Charging current or discharging current 43 makes it possible for the system to respond automatically to a fluctuating power load 13. As to the capacitor 42, a capacitor which has a high capacity value and high performance of charge or discharge characteristics, or, a secondary battery is favorable.

Concerning the output power of the fuel cell unit having the hydrogen generating apparatus having abovementioned composition, on condition that all the reaction took place perfectly (100%), and that the consumption rate of the fuel in the fuel tank 1 is 1g/s, then, the produced hydrogen 7 at the reactor 6 is 2.4 liters/s and the output power of the fuel cell 8 will be about 14 kW/s.

Furthermore, used fuel 20 and aqueous solution produced during the operation of the system, are so arranged to be collected and recycled according to the manner explained hereinafter.

After hydrogen generating reaction took place in the reactor 6, the used fuel 20 (sodium boronate: NaBO₂), which is shown in the right side of the reaction formula 2, and the remaining aqueous solution (. H₂O), which is the residual water out of the water consisting the water dissolved fuel 5, a part of which was used for hydrogen generating reaction, are transferred to the water separation tank 22 in a form of aqueous solution. By means of the water separation film installed in the water separation tank 22, water is separated from the residual substance and is recycled, recycled water 23 is stored in a temporally storage tank 26 and is reused as the additive water 4.

Furthermore, vapor, which is generated in the fuel cell unit 8 in operation and is emitted as a part of the emission 14, is recycled as the collected water 21 by means of condenser 15, and is conveyed to the temporary storage tank 26 via a connecting pipe 25, and is stored in the tank for recycle use.

Total water obtained is a sum of the collected water 21 and the recycled water 23 (4H₂O + . H₂O) as stated above. Thus, in the fuel cell system having the hydrogen generator unit 7a, amount of water used as additive water 4 is almost equal to the total amount of collected water and recycled water. Therefore, in this system, the collected water 21 and the recycled water 23 are recycled and used for the additive water 4.

As the necessary water in the system can be provided by the recycled water in the same system, water (2H₂O) in the second term of the left side of reaction formula 1 stated above, particularly predetermined amount of water, is required to be supplied to the system when the system starts operation, however, additional water is not needed except for a small amount of water at the time of maintenance during the operation of the system thereafter.

This means that, as shown in the reaction formula 1 stated above, in the hydrogen generating system which uses only solid fuel 2, (NaBH₄) and is equipped with fuel cell unit 8, the reaction can be carried out without adding any water from outside of the system as the recycled water can be used for additive water 4. In the fuel system having the hydrogen generator unit 7a according to the present invention, as shown in the reaction formula 1 stated above, two molecular of hydrogen (2H₂) from sodium boro-hydride fuel 2 (NaBH₄) in the first term of the left side of the formula and two molecular of hydrogen from water (2H₂O) in the second term of the left side of the formula make total of four molecular of hydrogen.

As the conclusion, in the system, by using only solid sodium boro-hydride fuel 2 (NaBH₄) and without supplying any additional water from outside of the system, four molecular of generated hydrogen 7, which is two times as much as the hydrogen which the fuel contains, is obtained and, therefore, electric power equivalent to 4H₂ is obtained.

In addition, it is possible to take the stored used fuel 20 (NaBO₂) out of the system at a certain time, when it is necessary, and is possible to recycle it to sodium boro-hydride (NaBH₄) by means of hydridation, that will be carried out by a fuel recycling process installed in other than the system. The recycling, that is, recycle of the used hydrogen fuel to a new one by means of hydridation process, using water as a row material, can be carried out as many times as required, therefore, an effective reuse of a hydrogen resource can be achieved.

It is important that, in the recycling process of the used fuel 20, the hydrogen resources, which is required for hydridation, makes it possible to generate electric power in the fuel cell system having the hydrogen generator unit 7a by consuming half amount of the hydrogen resource above.

Therefore, the system is of two times more effective than conventional hydrogen storing systems. Thus, it is possible to realize the fuel cell system having the hydrogen generator unit 7a, which makes it possible to realize a clean fuel system which has a characteristic of less burden for environment at its operation, by utilizing an improved fuel resource use, that is a doubled hydrogen resource use as explained above.

In the embodiment of the fuel cell system having the hydrogen generator unit 7a according to the present invention, the following effects will be obtained.
(1) An embodiment of the fuel cell system having the hydrogen generator unit 7a according to the present invention makes it possible for the system to respond automatically to a fluctuating power load, that is, to supply necessary electric power to the load by controlling an amount of necessary water dissolved fuel 5 mome ntarily.
(2) As water component, which is necessary for hydrolysis, is controlled in the system, is stored in the temporary storage tank 26, and is recycled for reuse, supply of water component from outside of the system is not required, but only small amount of additional water component is needed for maintenance purpose. As a result, the fuel cell system having the hydrogen generator unit 7a is obtained as of having a storage tank, which is smaller in size and lighter in weight, for solid hydride fuel 2.
(3) Such fuel cell system having the hydrogen generator unit 7a as explained below is obtained. As the system is operated by using only sodium boro-hydride (NaBH4) as solid hydride fuel 2 without supplying water, which takes charge of generating hydrogen by half, hydrogen 7 (4H₂), of which amount is two times as much as the amount of the hydrogen contained in the fuel in the system, is generated and electric power equivalent to 4H₂ is obtained.
(4) As the water component contained in the used fuel 20 and contained in emission from fuel cell unit 8 is collected for recycle use inside the system, it is possible to prevent a water component draining out of the system.
(5) Amount of the used fuel 20 at the time of storing is minimized as the extra water component contained in the used fuel 20 is collected for recycle use. Therefore, the volume of the fuel cell system having the hydrogen generator 7a will be minimized.
(6) By realizing what is explained in items (2) to (4), it is possible to obtain such fuel cell system having the hydrogen generator unit 7a as that which minimizes emission during operation and minimizes burden for environment.

The water separation tank which separates water component contained in the used fuel and a temporary storage tank, which stores the water component from the water separation tank, are provided. And, also the fuel cell unit which receives the hydrogen generated in the reactor constitutes the system.

### Possibility of Industrial Utilization of the Invention:

The fuel cell system having the hydrogen generating apparatus according to the present invention is as of a stand-alone type power system and, therefore, the power supply from a power line is not needed. Because of this reason, it can be used as a power source for such device as a mobile vehicle, which cannot be wire-connected to a power line. The fuel cell system having the hydrogen generating apparatus according to the present invention can be utilized for a power source for automobiles and motor coaches.

## Claims

1. A fuel sell system having a hydrogen generating apparatus comprising a fuel tank for storing solid hydride fuel, a mixer for dissolving said solid hydride fuel stored in said fuel tank into water dissolved fuel by using water, a reactor for generating hydrogen through chemical reaction which is caused by said water dissolved fuel which is produced in said mixer, a fuel cell unit connected by means of piping to said reactor, a capacitor connected electrically to output terminals of said fuel cell unit in a manner of parallel connection, and a controller for controlling electrically all the function of said fuel cell system, wherein said fuel cell system inputs a predetermined data concerning electric power to be supplied in response to fluctuating power load to said system controller, controls an amount of said water dissolved fuel to be poured to said reactor on a basis of said determined data, puts said fuel cell unit in operation by feeding hydrogen generated in said reactor, and makes it possible to respond to a fluctuating power load automatically by utilizing total of said electric power generated by said fuel cell unit and charging or discharging power of said capacitor.

2. In a fuel sell system having a hydrogen generating apparatus according to claim 1 in which a water separation tank which separates water from the used fuel, which is produced in said reactor, a condenser which produces water from an emission generated in said reactor by means of condensation, and a temporary storage tank which stores said separated water from said water separation tank and said condensed water from said condenser, constitutes said fuel cell system, wherein said fuel cell system supplies water from said temporary storage tank to said mixer.

3. In a hydrogen generating apparatus in which a fuel tank which stores solid hydride fuel, a mixer which dissolves said solid hydride fuel stored in said fuel tank into water dissolved fuel by using water, a reactor which generates hydrogen through chemical reaction that is caused by said water dissolved fuel which is produced in said mixer, a water separation tank which separates water from the used fuel which is produced in said reactor, and a temporary storage tank which stores said separated water from said water separation tank, constitute said fuel cell system, wherein said fuel cell system supplies water from said temporary storage tank to said reactor.

4. In a hydrogen generating apparatus according to claim 3 in which said fuel cell system which is connected to a hydrogen generating apparatus, pressurizes said water dissolved fuel and jets said pressurized water dissolved fuel into said reactor in a manner of pulse jet.

5. In a hydrogen generating apparatus according to claim 3 in which said fuel cell system which is connected to a hydrogen generating apparatus, supplies hydrogen which is generated in said reactor to a fuel cell unit.
